# EUROPÄISCHE PATENTSCHRIFT

(11) **EP 3 987 365 B1**
(45) Veröffentlichungstag und Bekanntmachung des Hinweises auf die Patenterteilung: **23.08.2023**
(21) Anmeldenummer: 19752942.3
(22) Anmeldetag: 24.07.2019
(51) Int. Cl.: G05B 19/042, G05B 19/05, G06Q 10/06

(54) **SELBSTLERNENDE ROUTINE FÜR KOMPATIBILITÄTSPRÜFUNG**
SELF-LEARNING ROUTINE FOR CHECKING COMPATIBILITY
ROUTINE D'APPRENTISSAGE AUTOMATIQUE POUR UNE VÉRIFICATION DE COMPATIBILITÉ

(43) Veröffentlichungstag der Anmeldung: 27.04.2022
(73) Patentinhaber: Siemens Aktiengesellschaft, 80333 München (DE)
(72) Erfinder: DRUMM, Oliver, 76344 Eggenstein-Leopoldshafen (DE)
(74) Vertreter: Siemens Patent Attorneys
(86) Internationale Anmeldenummer: PCT/EP2019/069976
(87) Internationale Veröffentlichungsnummer: WO 2021/013348

(56) Entgegenhaltungen:
- EP-A1- 3 056 955
- WO-A1-2017/210753

## Beschreibung

Die vorliegende Erfindung geht aus von einem Betriebsverfahren für ein Planungswerkzeug,
- wobei mittels des Planungswerkzeugs ein Steuerprogramm für eine industrielle technische Steuerung erstellt wird,
- wobei das Steuerprogramm Programmdaten umfasst,
- wobei den Programmdaten von dem Planungswerkzeug aufgrund entsprechender Vorgaben durch einen Bediener des Planungswerkzeugs Namen zugeordnet werden, aufgrund derer die Programmdaten bezüglich der anderen Programmdaten des Steuerprogramms individualisiert werden,
- wobei das Steuerprogramm nach dessen Erstellung von dem Planungswerkzeug an eine Datenverarbeitungseinrichtung übermittelt wird,
- wobei das Planungswerkzeug die Namen der Programmdaten des Steuerprogramms vor der Übermittlung des Steuerprogramms an die Datenverarbeitungseinrichtung mittels einer Prüfroutine auf Kompatibilität mit der Datenverarbeitungseinrichtung prüft,
- wobei das Planungswerkzeug immer dann, wenn es mittels der Prüfroutine eine Inkompatibilität erkennt, eine entsprechende Fehlermeldung an den Bediener ausgibt und immer dann, wenn es mittels der Prüfroutine keine Inkompatibilität erkennt, entweder keine Meldung oder eine Meldung des Inhalts, dass es keinen Fehler erkannt hat, an den Bediener ausgibt.

In der Anlagenplanung werden oftmals unterschiedliche Planungswerkzeuge eingesetzt. Planungswerkzeuge im Sinne der vorliegenden Erfindung sind Recheneinrichtungen wie beispielsweise Personal Computer (PC), die in Software erstellte Programme abarbeiten, so dass mittels der Recheneinrichtungen Steuerprogramme für industrielle technische Steuerungen erstellt werden.

Um das jeweilige Steuerprogramm effektiv und mit hoher Qualität erstellen zu können, werden die Daten zunächst mittels eines ersten Planungswerkzeugs erstellt und sodann an ein zweites Planungswerkzeug übertragen. Mittels des zweiten Planungswerkzeugs erfolgt unter Verwertung des Steuerprogramms eine weitergehende Verarbeitung, beispielsweise eine Erstellung eines weiteren Steuerprogramms. Das erste Planungswerkzeug ist ein Planungswerkzeug im Sinne der vorliegenden Erfindung, das zweite Planungswerkzeug eine Datenverarbeitungseinrichtung im Sinne der vorliegenden Erfindung. Ein typisches Beispiel eines ersten Planungswerkzeugs ist ein sogenanntes Anlagenplanungswerkzeug COMOS, ein typisches Beispiel eines zweiten Planungswerkzeugs ein SIMATIC PCS 7.

Die Schnittstellen zwischen den Planungswerkzeugen (bzw. dem Planungswerkzeug und der Datenverarbeitungseinrichtung) unterliegen Randbedingungen bezüglich der übertragenen Daten. So können beispielsweise unterschiedliche Restriktionen bezüglich der Länge eines Namens und/oder der innerhalb eines Namens zulässigen Zeichen bestehen. Beispielsweise kann das Planungswerkzeug Namen mit einer Länge von bis zu 15 Zeichen zu lassen, wobei als einzelne Zeichen sowohl große als auch kleine Buchstaben sowie Ziffern und Leerstellen zugelassen sind. Ebenso beispielsweise kann die Datenverarbeitungseinrichtung Namen mit einer Länge von bis zu 10 Zeichen zu lassen, wobei als einzelne Zeichen ausschließlich große Buchstaben und Ziffern zugelassen sind.

Werden im Rahmen der Erstellung des Steuerprogramms durch das Planungswerkzeug Namen vergeben, die inkompatibel mit den für die Datenverarbeitungseinrichtung zulässigen Namen sind, führt die Übermittlung des Steuerprogramms an die Datenverarbeitungseinrichtung dort zu einem Fehler. Eine entsprechende Fehlermeldung wird an das Planungswerkzeug übermittelt. Die Namen müssen daraufhin auf Seiten des Planungswerkzeugs neu vergeben werden, so dass sie den Restriktionen der Datenverarbeitungseinrichtung entsprechen. Danach muss das entsprechend modifizierte Steuerprogramm erneut an die Datenverarbeitungseinrichtung übermittelt werden. Dies ist zum einen zeitaufwendig und darüber hinaus mühsam.

Um von vorneherein eine ordnungsgemäße Übertragung gewährleisten zu können, kann im Planungswerkzeug eine Prüfroutine implementiert sein, mittels derer die Namen der Programmdaten des Steuerprogramms bereits vor der Übermittlung des Steuerprogramms an die Datenverarbeitungseinrichtung auf Kompatibilität mit der Datenverarbeitungseinrichtung geprüft werden.

Rein theoretisch lässt sich ein vollständiges Regelwerk für eine derartige Prüfroutine erstellen. In der Praxis zeigt sich aber, dass eine Vollständigkeit eines derartigen Regelwerks nur schwer und mit erheblichen Aufwand zu realisieren ist. Ursache hierfür kann beispielsweise sein, dass die Restriktionen der Datenverarbeitungseinrichtung oftmals nur unvollständig dokumentiert und/oder offengelegt sind. Ursache hierfür kann weiterhin sein, dass das Regelwerk sehr komplex ist und die vollständige Implementierung nur mit einem unzumutbar hohen Aufwand möglich ist. Weiterhin kann sich das Regelwerk im Laufe der Zeit ändern.

In der Praxis ist ein derartiges Regelwerk daher immer unvollständig, so dass sich bei der Übertragung des Steuerprogramms vom Planungswerkzeug zur Datenverarbeitungseinrichtung immer wieder Fehler ergeben, die der Bediener hinterher mühsam beseitigen muss.

Die Aufgabe der vorliegenden Erfindung besteht darin, ein Betriebsverfahren für ein Planungswerkzeug zu schaffen, bei dem innerhalb des Planungswerkzeugs mit vernünftigem Aufwand eine gute bis sehr gute Prüfung der Namen der Programmdaten des Steuerprogramms auf Kompatibilität mit der Datenverarbeitungseinrichtung möglich ist.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 4.

Erfindungsgemäß wird ein Betriebsverfahren der eingangs genannten Art dadurch ausgestaltet,
- dass das Planungswerkzeug von der Datenverarbeitungseinrichtung eine Bewertung des Steuerprogramms entgegennimmt und
- dass das Planungswerkzeug die Prüfroutine anhand des jeweiligen Steuerprogramms und der entgegengenommenen Bewertung nachtrainiert, so dass die Prüfroutine nach und nach lernt, welche Namen für die Programmdaten kompatibel mit der Datenverarbeitungseinrichtung sind.

Dadurch ist das Planungswerkzeug in der Lage, mittels der Prüfroutine nach und nach zu lernen, welche Namen für die Programmdaten zulässig sind und welche nicht. Bei unverändertem Regelwerk als solchem wird die Prüfroutine im Laufe der Zeit immer besser. Wenn sich das Regelwerk ändert, ergibt sich zwar temporär eine Verschlechterung. Aufgrund des Umstands, dass die Prüfroutine nach und nach lernt, welche Namen für die Programmdaten kompatibel mit der Datenverarbeitungseinrichtung, gibt sich aber auch hier im Laufe der Zeit ganz von selbst - insbesondere ohne aktive Neuprogrammierung der Prüfroutine durch einen Programmierer - wieder eine Verbesserung.

Die Prüfroutine basiert also auf Ansätzen des maschinellen Lernens. Ein explizites Ansetzen von Prüfalgorithmen als solchen, die ständig von einem Programmierer angepasst werden müssen, kann hingegen entfallen.

Maschinelles Lernen als solches ist Fachleuten allgemein bekannt. Bei einem maschinellen Lernen werden einer entsprechenden Routine eine große Anzahl an beispielhaften Daten, sogenannte Trainingsdaten, und die zugehörigen Bewertungen vorgegeben. Hieraus ermittelt die Routine selbsttätig die Kriterien, anhand derer sie später vorgegebene Daten bewertet. Rein beispielhaft können neuronale Netze, ein multinomialer Naive Bayes Klassifizierer und ein stochastischer Gradient absteigender Klassifizierer genannt werden. Insbesondere die beiden letztgenannten Klassifizierer sind besonders geeignet, um inkrementell zu lernen und die Prüfroutine dadurch im normalen Betrieb des Planungswerkzeugs kontinuierlich zu verbessern.

Vorzugsweise prüft das Planungswerkzeug die Namen der Programmdaten des Steuerprogramms bereits während der Vorgabe der Namen durch den Bediener. Dadurch kann sofort bei der Vorgabe der Namen durch den Bediener korrigierend eingegriffen werden.

In manchen Fällen ist die von der Datenverarbeitungseinrichtung an das Planungswerkzeug übermittelte Bewertung des Steuerprogramms rein binär (Steuerprogramm in Ordnung oder Steuerprogramm nicht in Ordnung). Oftmals erfolgt jedoch eine weitergehende Aufschlüsselung, beispielsweise eine Aussage für die einzelnen Namen, ob sie kompatibel sind oder nicht. Alternativ oder zusätzlich kann in dem Fall, dass das Steuerprogramm nicht in Ordnung ist, auch eine Aufschlüsselung nach Art des Fehlers erfolgen. In diesem letztgenannten Fall ist es möglich, dass das Planungswerkzeug immer dann, wenn eine Fehlermeldung an den Bediener ausgegeben wird, beim Bediener einen die Fehlermeldung erläuternden Text abfragt und ihn der Fehlermeldung zuordnet. Durch diese Vorgehensweise kann der Anwender bei einer späteren Vorgabe eines aus denselben Gründen als inkompatibel erkannten Namens sofort darauf hingewiesen werden, worin die Inkompatibilität besteht.

Es ist möglich, dass die Prüfroutine bei der erstmaligen Ausführung "völlig unwissend" ist. Es ist jedoch alternativ möglich, dass das Planungswerkzeug die bisher erwähnten Schritte des Betriebsverfahrens in einem Normalbetrieb ausführt. In diesem Fall können dem Planungswerkzeug in einem Lernbetrieb eine Vielzahl von Steuerprogrammen und eine jeweilige Bewertung des jeweiligen Steuerprogramms vorgegeben werden. Dadurch ist das Planungswerkzeug in der Lage, die Prüfroutine im Lernbetrieb anhand der vorgegebenen Steuerprogramme und der zugehörigen vorgegebenen Bewertungen zu trainieren. Der Lernbetrieb kann insbesondere vorab ausgeführt werden, also vor der erstmaligen Ausführung des Normalbetriebs. Er kann auch zu späteren Zeitpunkten angenommen werden. Der Unterschied zum Normalbetrieb besteht darin, dass das Steuerprogramm im Lernbetrieb nicht an die Datenverarbeitungseinrichtung übermittelt wird. Im Regelfall wird auch das Steuerprogramm nicht erstellt, sondern ist bereits anderweitig gegeben und bekannt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigt in schematischer Darstellung:

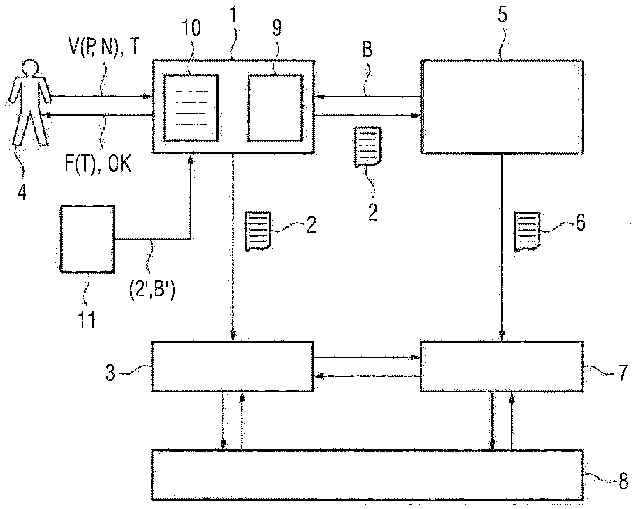

- FIG 1: ein Planungswerkzeug und eine Datenverarbeitungseinrichtung.

Gemäß FIG 1 soll mittels eines Planungswerkzeugs 1 ein Steuerprogramm 2 für eine industrielle technische Steuerung 3 - beispielsweise eine speicherprogrammierbare Steuerung - erstellt werden. Das Planungswerkzeug 1 kann beispielsweise ein üblicher, entsprechend programmierter Computer sein, insbesondere ein PC oder eine Workstation.

Zum Erstellen des Steuerprogramms 2 nimmt das Planungswerkzeug 1 von einem Bediener 4 Vorgaben V entgegen. Die Vorgaben V legen, sowie allgemein bekannt, zum einen fest, welche Funktionalitäten mittels des Steuerprogramms 2 realisiert werden sollen. Zum Festlegen der Funktionalitäten definiert der Bediener 4 Blöcke und Einheiten des Steuerprogramms 2, mittels derer die Funktionalitäten realisiert werden. Diese Blöcke und Einheiten sind die Programmdaten P des Steuerprogramms 2. Die Vorgaben V legen zum anderen fest, mit welchen Namen N die Blöcke und Einheiten bezeichnet werden. Mittels der Namen N werden die Blöcke und Einheiten - also die Programmdaten P - bezüglich der anderen Programmdaten des Steuerprogramms 2 individualisiert, so dass von dem Planungswerkzeug 1 aufgrund entsprechender Vorgaben V des Bedieners 4 konkret der durch den jeweiligen Namen N definierte Block bzw. die durch den jeweiligen Namen N definierte Einheit manipuliert wird. Das Planungswerkzeug 1 ordnet somit den jeweiligen Namen N den entsprechenden Blöcken und Einheiten (bzw. Programmdaten P) entsprechend der Vorgaben V durch den Bediener 4 zu.

Nach dem Erstellen des Steuerprogramms 2 wird das Steuerprogramm 2 von dem Planungswerkzeug 1 an eine Datenverarbeitungseinrichtung 5 übermittelt. Die Datenverarbeitungseinrichtung 5 kann - ebenso wie das Planungswerkzeug 1 - beispielsweise ein üblicher, entsprechend programmierter Computer sein, insbesondere ein PC oder eine Workstation. Von der Datenverarbeitungseinrichtung 5 wird das Steuerprogramm 2 verwertet. Beispielsweise kann eine Modifizierung des Steuerprogramms 2 erfolgen. Alternativ oder zusätzlich kann unter Berücksichtigung des Steuerprogramms 2 ein anderes Programm 6 erstellt werden, beispielsweise ein Programm für ein Bedien- und Beobachtungssystem für eine Leitwarte 7, von der aus eine mittels des Steuerprogramms 2 gesteuerte Anlage 8 überwacht wird.

Die Namen N der Programmdaten P unterliegen Restriktionen. Dies gilt sowohl bezüglich des Planungswerkzeugs 1 als auch bezüglich der Datenverarbeitungseinrichtung 5. Mit anderen Worten: Damit das Planungswerkzeug 1 die durch ihren jeweiligen Namen N individualisierten Programmdaten P des Steuerprogramms 2 richtig verarbeiten kann, muss der jeweilige Name N die Restriktionen des Planungswerkzeugs 1 erfüllen. In gleicher Weise muss der jeweilige Name N die Restriktionen der Datenverarbeitungseinrichtung 5 erfüllen, damit die Datenverarbeitungseinrichtung 5 die durch ihren jeweiligen Namen N individualisierten Programmdaten P des Steuerprogramms 2 richtig verarbeiten kann.

Die Restriktionen des Planungswerkzeugs 1 können dem Planungswerkzeug 1 ohne weiteres bekannt sein. Sie können vom Planungswerkzeug 1 insbesondere bereits während der Vorgabe der Namen N durch den Bediener 4 geprüft werden.

Zum Einhalten auch der Restriktionen der Datenverarbeitungseinrichtung 5 prüft das Planungswerkzeug 1 die Namen N der Programmdaten P des Steuerprogramms 2 mittels einer Prüfroutine 9 auf Kompatibilität mit der Datenverarbeitungseinrichtung 5. Erkennt das Planungswerkzeug 1 mittels der Prüfroutine 9 eine Inkompatibilität, so gibt das Planungswerkzeug 1 eine entsprechende Fehlermeldung F an den Bediener 4 aus. Aus der Fehlermeldung F geht zumindest hervor, welche Namen N als inkompatibel erkannt wurden. Gegebenenfalls kann aus der Fehlermeldung F auch hervorgehen, welcher Art der Fehler ist, beispielsweise "Zeichenlänge zu groß" und/oder "unzulässiges Zeichen verwendet" und/oder "Name bereits anderweitig vergeben". Aufgrund der Fehlermeldung F ist der Bediener 4 in der Lage, die als inkompatibel erkannten Namen N entsprechend zu ändern. Erkennt das Planungswerkzeug 1 mittels der Prüfroutine 9 hingegen keine Inkompatibilität, so gibt das Planungswerkzeug 1 entweder keine Meldung an den Bediener 4 aus oder das Planungswerkzeug 1 gibt eine Meldung OK an den Bediener 4 aus, dass das Planungswerkzeug 1 keinen Fehler erkannt hat.

Das Planungswerkzeug 1 führt die Prüfung des Steuerprogramms 2 auf Kompatibilität aus, bevor das Planungswerkzeug 1 das Steuerprogramm 2 an die Datenverarbeitungseinrichtung 5 übermittelt. Im Ergebnis wird dadurch erreicht, dass das Planungswerkzeug 1 das Steuerprogramm 2 nur dann ohne weiteres an die Datenverarbeitungseinrichtung 5 übermittelt, wenn das Planungswerkzeug 1 mittels der Prüfroutine 9 zuvor keine Inkompatibilität erkennt.

Die Datenverarbeitungseinrichtung 5 selbst prüft ihrerseits ebenfalls, ob die Namen N der Programmdaten P des Steuerprogramms 2 die Restriktionen der Datenverarbeitungseinrichtung 5 erfüllen. Sie ermittelt basierend auf dieser Prüfung eine Bewertung B. Die Bewertung B kann von Art und Aufbau her mit der Fehlermeldung F korrespondieren. Sie gibt die Bewertung B an das Planungswerkzeug 1 aus, das die Bewertung B seinerseits entgegennimmt. Anhand des Steuerprogramms 2 - also des an die Datenverarbeitungseinrichtung 5 übermittelten Steuerprogramms 2 - und der Bewertung B trainiert das Planungswerkzeug 1 die Prüfroutine 9 nach. Das Planungswerkzeug 1 passt die Prüfroutine 9 also an. Die Prüfroutine 9 ist nach Art eines Lernalgorithmus ausgebildet. Entsprechende Algorithmen sind Fachleuten allgemein bekannt. Aufgrund der Ausgestaltung als Lernalgorithmus lernt die Prüfroutine 9 nach und nach, welche Namen N für die Programmdaten P kompatibel mit der Datenverarbeitungseinrichtung 5 sind.

Es ist möglich, dass das Planungswerkzeug 1 die Prüfroutine 9 erst unmittelbar vor dem Übermitteln des Steuerprogramms 2 an die Datenverarbeitungseinrichtung 5 ausführt. In diesem Fall wird zuerst das Steuerprogramm 2 vollständig erstellt und werden erst danach die Namen N der Programmdaten P auf Kompatibilität geprüft. Vorzugsweise prüft das Planungswerkzeug 1 die Namen N der Programmdaten P des Steuerprogramms 2 jedoch bereits während der Vorgabe der Namen N durch den Bediener 4. Die Prüfroutine 9 wird von dem Planungswerkzeug 1 also während der Vorgabe der Namen N der Programmdaten P kontinuierlich im Hintergrund ausgeführt und greift sofort ein, wenn ein als inkompatibel erkannter Name N vorgegeben wird.

Es ist möglich, dass ein Name N mit der Datenverarbeitungseinrichtung 5 kompatibel ist, obwohl er von der Prüfroutine 9 als inkompatibel eingestuft wird. Beispielsweise kann dem Bediener 4 bekannt sein, dass sich die Restriktionen der Datenverarbeitungseinrichtung 5 geändert haben, so dass ein Name N, der zuvor inkompatibel war, nunmehr kompatibel ist. In einem derartigen Fall generiert die Prüfroutine 9 eine Fehlermeldung F, obwohl keine Inkompatibilität vorliegt. Um auch derartige Fälle zu berücksichtigen, wird eine Übermittlung des Steuerprogramms 2 an die Datenverarbeitungseinrichtung 5 vorzugsweise auch dann zugelassen, wenn die Prüfroutine 9 eine Inkompatibilität erkennt. Es ist nach Bedarf möglich, diese Übermittlung bedingungslos oder erst aufgrund einer ausdrücklichen Bestätigung durch den Bediener 4 durchzuführen. Aufgrund der Bewertung B erkennt das Planungswerkzeug 1 jedoch, dass die mittels der Prüfroutine 9 erkannte Inkompatibilität nicht vorliegt. Das Planungswerkzeug 1 kann diesen Sachverhalt berücksichtigen und die Prüfroutine 9 entsprechend nachtrainieren.

Es ist möglich, die Prüfroutine 9 nach jeder einzelnen Übermittlung eines Steuerprogramms 2 nachzutrainieren. In vielen Fällen ist es jedoch sinnvoller, eine gewisse Anzahl an übermittelten Steuerprogrammen 2 und die zugehörigen Bewertungen B zunächst in einer Tabelle 10 zu hinterlegen und die Prüfroutine 9 erst dann einmal nachzutrainieren, wenn in der Tabelle 10 hinreichend viele Paare von Steuerprogrammen 2 und zugehörigen Bewertungen B hinterlegt sind. Die Anzahl an Paaren kann geeignet bestimmt sein und beispielsweise im zweistelligen oder dreistelligen Bereich liegen.

Wie bereits erwähnt, kann aus der Fehlermeldung F hervorgehen, welcher Art ein aufgetretener Fehler ist. Es ist möglich, dass derartige Informationen der Prüfroutine 9 nicht vorab bekannt sind. Dennoch ist es möglich, den Fehlermeldungen F entsprechende Informationen zuzuordnen. Beispielsweise ist es möglich, das Planungswerkzeug 1 immer dann, wenn eine Fehlermeldung F an den Bediener 4 ausgegeben wird, beim Bediener 4 einen Text T abfragt und - sofern der Bediener 4 einen entsprechenden Text T vorgibt - den Text T der Fehlermeldung F zuordnet. Mittels des Textes T kann die Fehlermeldung F erläutert werden. Dadurch kann der Fehlermeldung F ein für den Bediener 4 ohne weiteres verständlicher Klartext zugeordnet werden, beispielsweise die bereits erwähnten möglichen Texte T "Zeichenlänge zu groß" und "unzulässiges Zeichen verwendet". Wenn zu einem späteren Zeitpunkt derselbe Fehler nochmals auftritt, kann dann die Fehlermeldung F zusammen mit dem Text T ausgegeben werden.

Der bisher erläuterte Betrieb des Planungswerkzeugs 1 entspricht einem Normalbetrieb des Planungswerkzeugs 1. Es ist möglich, das Planungswerkzeug 1 ausschließlich in diesem Normalbetrieb zu betreiben. In diesem Fall ist die Prüfroutine 9 anfangs "unwissend" und erkennt zunächst gar keine Inkompatibilitäten. Sie lernt aber nach und nach und wird dadurch immer "besser". Alternativ ist es möglich, einen Lernbetrieb zu implementieren. Der Lernbetrieb wird außerhalb des Normalbetriebs ausgeführt. Im Lernbetrieb wird dem Planungswerkzeug 1 eine Vielzahl von Steuerprogrammen 2' und eine Bewertungen B' für die Steuerprogramme 2' vorgegeben. Insbesondere werden die Steuerprogramme 2' somit nicht mittels des Planungswerkzeugs 1 erstellt. Auch werden die Bewertungen B' nicht von der Datenverarbeitungseinrichtung 5 aufgrund der vorherigen Übermittlung der Steuerprogramme 2' vom Planungswerkzeug 1 an die Datenverarbeitungseinrichtung 5 vorgegeben. Im Übrigen kann die Vorgabe über eine beliebige Eingabeeinrichtung 11 erfolgen. Beispielsweise können die Steuerprogramme 2' und die zugehörigen Bewertungen B' über die Eingabeeinrichtung 11 in die Tabelle 10 eingeschrieben werden. Anhand der Steuerprogramme 2' und der zugehörigen Bewertungen B' trainiert das Planungswerkzeug 1 - losgelöst von einer tatsächlichen Erstellung von Steuerprogrammen 2 - im Lernbetrieb die Prüfroutine 9.

### Zusammengefasst betrifft die vorliegende Erfindung somit folgenden Sachverhalt

Mittels eines Planungswerkzeugs 1 wird ein Steuerprogramm 2 für eine industrielle technische Steuerung 3 erstellt. Das Steuerprogramm 2 umfasst Programmdaten P, denen von dem Planungswerkzeug 1 aufgrund entsprechender Vorgaben V durch einen Bediener 4 des Planungswerkzeugs 1 Namen N zugeordnet werden, aufgrund derer die Programmdaten P bezüglich der anderen Programmdaten des Steuerprogramms 2 individualisiert werden. Das Steuerprogramm 2 wird nach seiner Erstellung von dem Planungswerkzeug 1 an eine Datenverarbeitungseinrichtung 5 übermittelt. Zuvor prüft das Planungswerkzeug 1 die Namen N der Programmdaten P des Steuerprogramms 2 mittels einer Prüfroutine 9 auf Kompatibilität mit der Datenverarbeitungseinrichtung 5. Wenn das Planungswerkzeug 1 mittels der Prüfroutine 9 eine Inkompatibilität erkennt, gibt es eine entsprechende Fehlermeldung F an den Bediener 4 aus. Anderenfalls gibt es entweder keine Meldung oder eine Meldung OK des Inhalts, dass es keinen Fehler erkannt hat, an den Bediener 4 aus. Das Planungswerkzeug 1 nimmt von der Datenverarbeitungseinrichtung 5 eine Bewertung B des Steuerprogramms 2 entgegen und trainiert die Prüfroutine 9 anhand des jeweiligen Steuerprogramms 2 und der entgegengenommenen Bewertung B nach, so dass die Prüfroutine 9 nach und nach lernt, welche Namen N für die Programmdaten P kompatibel mit der Datenverarbeitungseinrichtung 5 sind.

Die vorliegende Erfindung weist viele Vorteile auf. Insbesondere werden Fehler bzw. Inkompatibilitäten frühzeitig erkannt. Eine Übertragung inkompatibler Steuerprogramme 2 an die Datenverarbeitungseinrichtung 5 wird vermieden bzw. zumindest auf ein Minimum reduziert. Wenn sich die Restriktionen der Datenverarbeitungseinrichtung 5 verändern, arbeitet die Prüfroutine 9 zwar zunächst etwas schlechter. Sie lernt aber auch hier wieder dazu, so dass die Prüfroutine 9 sich an die geänderten Restriktionen anpasst und diese lernt. Die Fehlermeldungen F können dem Bediener 4 leicht verständliche Hinweise zur Korrektur von Fehlern geben. Eine - oftmals schwierige - Definition von Regeln, die in der Prüfroutine 9 implementiert werden müssten, entfällt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Planungswerkzeug
- 2, 2': Steuerprogramme
- 3: industrielle technische Steuerung
- 4: Bediener
- 5: Datenverarbeitungseinrichtung
- 6: anderes Programm
- 7: Leitwarte
- 8: Anlage
- 9: Prüfroutine
- 10: Tabelle
- 11: Eingabeeinrichtung

- B, B': Bewertungen
- F: Fehlermeldung
- N: Namen
- OK: Meldung
- P: Programmdaten
- T: Text
- V: Vorgaben

## Patentansprüche

1. Betriebsverfahren für ein Planungswerkzeug (1),
- wobei mittels des Planungswerkzeugs (1) ein Steuerprogramm (2) für eine industrielle technische Steuerung (3) erstellt wird,
- wobei das Steuerprogramm (2) Programmdaten (P) umfasst,
- wobei den Programmdaten (P) von dem Planungswerkzeug (1) aufgrund entsprechender Vorgaben (V) durch einen Bediener (4) des Planungswerkzeugs (1) Namen (N) zugeordnet werden, aufgrund derer die Programmdaten (P) bezüglich der anderen Programmdaten des Steuerprogramms (2) individualisiert werden,
- wobei das Steuerprogramm (2) nach dessen Erstellung von dem Planungswerkzeug (1) an eine Datenverarbeitungseinrichtung (5) übermittelt wird,
- wobei das Planungswerkzeug (1) die Namen (N) der Programmdaten (P) des Steuerprogramms (2) vor der Übermittlung des Steuerprogramms (2) an die Datenverarbeitungseinrichtung (5) mittels einer Prüfroutine (9) auf Kompatibilität mit der Datenverarbeitungseinrichtung (5) prüft,
- wobei das Planungswerkzeug (1) immer dann, wenn es mittels der Prüfroutine (9) eine Inkompatibilität erkennt, eine entsprechende Fehlermeldung (F) an den Bediener (4) ausgibt und immer dann, wenn es mittels der Prüfroutine (9) keine Inkompatibilität erkennt, entweder keine Meldung oder eine Meldung (OK) des Inhalts, dass es keinen Fehler erkannt hat, an den Bediener (4) ausgibt,
- wobei das Planungswerkzeug (1) von der Datenverarbeitungseinrichtung (5) eine Bewertung (B) entgegennimmt, die darauf basiert, ob die Namen (N) der Programmdaten (P) des Steuerprogramms (2) die Restriktionen der Datenverarbeitungseinrichtung (5) erfüllen und
- wobei das Planungswerkzeug (1) die Prüfroutine (9) anhand des jeweiligen Steuerprogramms (2) und der entgegengenommenen Bewertung (B) nachtrainiert, so dass die Prüfroutine (9) nach und nach lernt, welche Namen (N) für die Programmdaten (P) kompatibel mit der Datenverarbeitungseinrichtung (5) sind.

2. Betriebsverfahren nach Anspruch 1,
**dadurch gekennzeichnet,**
**dass** das Planungswerkzeug (1) die Namen (N) der Programmdaten (P) des Steuerprogramms (2) bereits während der Vorgabe der Namen durch den Bediener (4) prüft.

3. Betriebsverfahren nach Anspruch 1 oder 2,
**dadurch gekennzeichnet,**
**dass** das Planungswerkzeug (1) immer dann, wenn eine Fehlermeldung (F) an den Bediener (4) ausgegeben wird, beim Bediener (4) einen die Fehlermeldung (F) erläuternden Text (T) abfragt und der Fehlermeldung (F) zuordnet.

4. Betriebsverfahren nach Anspruch 1, 2 oder 3,
**dadurch gekennzeichnet,**
**dass** das Planungswerkzeug (1) die bisher erwähnten Schritte des Betriebsverfahrens in einem Normalbetrieb ausführt, dass dem Planungswerkzeug (1) in einem Lernbetrieb eine Vielzahl von Steuerprogrammen (2') und eine jeweilige Bewertung (B') des jeweiligen Steuerprogramms (2') vorgegeben werden und dass das Planungswerkzeug (1) die Prüfroutine (9) im Lernbetrieb anhand der vorgegebenen Steuerprogramme (2') und der zugehörigen vorgegebenen Bewertungen (B') trainiert.

## Claims

1. Operating method for a planning tool (1),
- wherein a control program (2) for an industrial technical control system (3) is created by means of the planning tool (1),
- wherein the control program (2) comprises program data (P),
- wherein names (N) are assigned to the program data (P) by the planning tool (1) on the basis of corresponding specifications (V) by a user (4) of the planning tool (1), on the basis of which names the program data (P) is individualised in relation to the other program data of the control program (2),
- wherein after its creation by the planning tool (1), the control program (2) is transmitted to a data processing facility (5),
- wherein the planning tool (1) checks the names (N) of the program data (P) of the control program (2) before the transmission of the control program (2) to the data processing facility (5), by means of a checking routine (9), for compatibility with the data processing facility (5),
- wherein the planning tool (1), whenever it identifies an incompatibility by means of the checking routine (9), outputs a corresponding error message (F) to the user (4), and whenever it identifies no incompatibility by means of the checking routine (9), either outputs no message or a message (OK) indicating that no error has been identified to the user (4),
- wherein the planning tool (1) receives an assessment (B) from the data processing facility (5), which is based on whether the names (N) of the program data (P) of the control program (2) meet the restrictions of the data processing facility (5), and
- wherein the planning tool (1) retrains the checking routine (9) on the basis of the relevant control program (2) and the received assessment(B) so that the checking routine (9) gradually learns which names (N) for the program data (P) are compatible with the data processing facility (5).

2. Operating method according to claim 1,
**characterised in that**
the planning tool (1) already checks the names (N) of the program data (P) of the control program (2) while the user (4) is specifying the names.

3. Operating method according to claim 1 or 2,
**characterised in that**
whenever an error message (F) is output to the user (4), the planning tool (1) asks the user (4) for a text (T) explaining the error message (F) and assigns it to the error message (F).

4. Operating method according to claim 1, 2 or 3,
**characterised in that**
the planning tool (1) executes the aforementioned steps of the operating method in normal operation, that the planning tool (1) is given a multiplicity of control programs (2') and a respective assessment (B') of the respective control program (2') in learning mode and that the planning tool (1) trains the checking routine (9) in learning mode on the basis of the specified control programs (2') and the associated specified assessments (B').

## Revendications

1. Procédé pour faire fonctionner un outil (1) de planification,
- dans lequel on établit, au moyen de l'outil (1) de planification, un programme (2) de commande pour une commande (3) technique industrielle,
- dans lequel le programme (2) de commande comprend des données (P) de programme,
- dans lequel on associe aux données (P) de programme par l'outil (1) de planification, sur la base de prescriptions (V) correspondantes par un opérateur (4) de l'outil (1) de planification, des dénominations (N), sur la base desquelles on individualise les données (P) de programme par rapport aux autres données de programme du programme (2) de commande,
- dans lequel on transmet le programme (2) de commande, après son établissement par l'outil (1) de planification, à un dispositif (5) de traitement de données,
- dans lequel l'outil (1) de planification contrôle, au moyen d'une routine (9) de contrôle, que les dénominations (N) des données (P) de programme du programme (2) de commande sont, avant la transmission du programme (2) de commande au dispositif (5) de traitement de données, compatibles avec le dispositif (5) de traitement de données,
- dans lequel l'outil (1) de planification envoie toujours à l'opérateur (4), lorsqu'il détecte une incompatibilité au moyen de la routine (9) de contrôle, un message (F) correspondant d'erreur, et n'envoie à l'opérateur (4), lorsqu'il ne détecte pas d'incompatibilité au moyen de la routine (9) de contrôle, ou bien pas de message ou bien un message (OK) dont le contenu est qu'il n'a pas détecté d'erreur,
- dans lequel l'outil (1) de planification reçoit, du dispositif (5) de traitement de données, une évaluation (B), qui repose sur le point de savoir si les dénominations (N) des données (P) de programme du programme (2) de commande satisfont les restrictions du dispositif (5) de traitement de données,
et
- dans lequel l'outil (1) de planification fait subir un apprentissage à la routine (9) de contrôle, à l'aide du programme (2) respectif de commande et de l'évaluation (B) reçue, de manière à ce que la routine (9) de contrôle apprenne peu à peu les dénominations (N) des données (P) de programme, qui sont compatibles avec le dispositif (5) de traitement de données.

2. Procédé suivant la revendication 1,
**caractérisé en ce que**
l'outil (1) de planification contrôle les dénominations (N), les données (P) du programme du programme (2) de commande, dès avant la prescription des dénominations par l'opérateur (4).

3. Procédé suivant la revendication 1 ou 2,
**caractérisé en ce que**
l'outil (1) de planification demande toujours, lorsqu'un message (F) d'erreur est envoyé à l'opérateur (4) auprès de l'opérateur (4), un texte (T) explicitant le message (F) d'erreur et l'associe au message (F) d'erreur.

4. Procédé suivant la revendication 1, 2 ou 3,
**caractérisé en ce que**
l'outil (1) de planification effectue les stades mentionnés jusqu'ici du procédé, dans un fonctionnement normal, **en ce que** l'on prescrit, à l'outil (1) de planification dans un fonctionnement d'apprentissage, une pluralité de programmes (2') de commande et une évaluation (B') respective du programme (2') respectif de commande, et **en ce que** l'outil (1) de planification fait subir un apprentissage à la routine (9) de contrôle, en fonctionnement d'apprentissage, à l'aide des programmes (2') de commande donnés à l'avance et des évaluations (B') données à l'avance, qui leur appartiennent.
